## Europäisches Patentamt

(19) **European Patent Office**

**Office européen des brevets**

(11) Veröffentlichungsnummer: **0 061 695**
B1

(12)

# EUROPÄISCHE PATENTSCHRIFT

(45) Veröffentlichungstag der Patentschrift:
25.04.84

(51) Int. Cl.³: **D 04 H 1/06**, D 04 H 1/08

(21) Anmeldenummer: **82102385.0**

(22) Anmeldetag: **23.03.82**

(54) **Verfahren zur Herstellung eines durch Behandlung mit heissem Wasser auf einen Walzenkern aufschrumpfbaren Faserüberzuges.**

(30) Priorität: **27.03.81 JP 46080/81**

(43) Veröffentlichungstag der Anmeldung:
**06.10.82 Patentblatt 82/40**

(45) Bekanntmachung des Hinweises auf die Patenterteilung:
**25.04.84 Patentblatt 84/17**

(84) Benannte Vertragsstaaten:
**DE FR GB IT NL SE**

(56) Entgegenhaltungen:
**DE - A - 2 057 406**
**US - A - 4 018 862**

(73) Patentinhaber: **Firma Carl Freudenberg, Höhnerweg 2, D-6940 Weinheim/Bergstrasse (DE)**

(72) Erfinder: **Miyazaki, Tadashi, 7-banchi, Oh-aza Kitatone Showa-Machi, Sashima-Gun Ibaragi-Ken (JP)**
Erfinder: **Hasegawa, Takao, 14-7 Honcho 2-chome Kuki-Shi, Saitama-Ken (JP)**

(74) Vertreter: **Weissenfeld-Richters, Helga, Dr., Höhnerweg 2, D-6940 Weinheim/Bergstrasse (DE)**

# Verfahren zur Herstellung eines durch Behandlung mit heißem Wasser auf einen Walzenkern aufschrumpfbaren Faserüberzuges

Die Erfindung betrifft ein Verfahren zur Herstellung eines durch Behandlung mit heißem Wasser auf einen Walzenkern aufschrumpfbaren, schlauchförmig ausgebildeten Faserüberzuges, bei dem im wesentlichen hygro-thermisch um wenigstens 10% schrumpfbare Fasern zu dem Faserüberzug vereint und anschließend durch eine Behandlung mit Feuchtigkeit und Wärme geschrumpft werden.

Ein Verfahren der vorstehend angegebenen Art wird in »Maschinenmarkt«, Würzburg 1975, Seiten 819/820 beschrieben. Es findet Anwendung bei der Herstellung von nahtlosen Filzwalzenbezügen, die zu 100% aus Wollfasern bestehen, welche unter der Einwirkung von Feuchtigkeit, Wärme, Reibung und Druck ohne die Zuhilfenahme von Bindemitteln zu einem dichten Gefüge verfestigt werden. Die Behandlung wird durch Walken fortgesetzt, und der fertige Filzwalzenbezug wird in nassem Zustand auf einen Durchmesser gespannt, der größer ist als der Durchmesser des zugehörigen Walzenkernes. In diesem Spannungszustand wird der Filzwalzenbezug getrocknet, und er behält seinen vergrößerten Durchmesser bei, bis er erneut mit Wasser in Berührung kommt. Der Filzwalzenbezug kann aus diesem Grunde nach dem Aufschieben auf einen Walzenkern durch eine einfache Benetzung mit Wasser zuverlässig verankert werden. Voraussetzung hierfür ist es allerdings, daß der Innendurchmesser sehr präzise an den Außendurchmesser des Walzenkernes angepaßt ist, und daß eine Beaufschlagung mit Feuchtigkeit unter allen Umständen unterbleibt. Insbesondere bei einer langen Lagerungsdauer können sich diesbezüglich Schwierigkeiten ergeben, weil bereits durch die Einwirkung der Luftfeuchtigkeit bei entsprechender Lagerungsdauer eine meßbare Schrumpfung des Durchmessers eintritt.

Der Erfindung liegt die Aufgabe zugrunde, ein Verfahren zur Herstellung eines durch Beaufschlagung mit heißem Wasser auf einen Walzenkern aufschrumpfbaren, schlauchförmig ausgebildeten Faserüberzug zu zeigen, das eine präzise Anpassung des Innendurchmessers des schlauchförmigen Faserüberzuges an den Außendurchmesser des zugehörigen Walzenkerns ebenso erübrigt wie eine gewaltsame Aufweitung des Innendurchmessers vor der Montage und das zugleich zu einem schlauchförmigen Faserüberzug führt, der sich inert gegenüber einer Beaufschlagung mit in der Atmosphäre enthaltener Feuchtigkeit verhält und insbesondere bei einer entsprechenden Feuchtigkeitsbeaufschlagung keinerlei Schrumpf zeigt.

Diese Aufgabe wird erfindungsgemäß mit einem Verfahren der eingangs genannten Art gelöst, das dadurch gekennzeichnet ist, daß die Fasern innerhalb des Faserüberzuges regellos verklebt werden und daß die Vorschrumpfung unterbrochen wird, wenn 3—50%, bevorzugt 5—25%, des theoretisch möglichen Schrumpfes der Fasern erreicht sind.

Die im Rahmen des vorgeschlagenen Verfahrens eingesetzten Fasern sind hygro-thermisch schrumpfbare Fasern, die bei einer Beaufschlagung mit Wasser einer Temperatur von 40—80° C eine Gesamtschrumpfung von wenigstens 10% erfahren. Der Schrumpfungskoeffizient in Prozenten läßt sich nach der folgenden Formel berechnen:

$$(l - l')/l \times 100$$

l bezeichnet die Länge der Fasern vor der Schrumpfung, l' die Länge der Fasern nach der Schrumpfung.

Als hygro-thermisch schrumpfbare Fasern kommen bevorzugt Polyvinylalkoholfasern, Polyamidfasern, Acrylfasern und dergleichen zur Anwendung. Sie umfassen wenigstens 40% des gesamten Faseranteils.

Dementsprechend kann der schrumpfbare, schlauchförmig ausgebildete Faserüberzug neben den hygro-thermisch schrumpfbaren Fasern noch andere Fasern enthalten, beispielsweise Reyon-, Baumwoll-, Woll- und/oder Acrylnitrilfasern und dergleichen. Es versteht sich von selbst, daß diese Fasern gleichmäßig mit den hygro-thermisch schrumpfbaren Fasern durchmischt sein müssen.

Bei der Herstellung des aufschrumpfbaren, schlauchförmig ausgebildeten Faserüberzuges werden die Fasern bevorzugt zunächst zu einem Faservlies zusammengelagert. Das kann auf an sich bekannte Weise erfolgen, beispielsweise unter Anwendung eines Krempel-, eines Luftlege-, eines Papierherstellungsverfahrens oder dergleichen. Bevorzugt werden Verfahren angewendet, die zu einem Faservlies führen, in welchem die hygro-thermisch schrumpfbaren Fasern überwiegend in nur einer Richtung orientiert sind. Ein besonders wirtschaftliches Verfahren zur Erzeugung entsprechend orientierter Vliese ist das Krempelverfahren.

Das erhaltene Faservlies wird auf einen Zylinder aufgewickelt. Sofern ein richtungsorientiertes Faservlies zur Verfügung steht, wird dieses so aufgewickelt, daß die hygro-thermisch schrumpfbaren Fasern in Umfangsrichtung orientiert sind. Die Fasern bewirken bei Auslösung der Schrumpfung eine große Anpressung an die Oberfläche des Walzenkernes und eine dementsprechend feste Verbindung zwischen dem Walzenkern und dem schlauchförmig ausgebildeten Faserüberzug.

Zur Herstellung des schlauchförmig ausgebildeten Faserüberzuges können auch andere Wickelmethoden herangezogen werden, beispielsweise das Flach-Wickeln oder das Webstuhl-Wickeln.

Die Anzahl der erforderlichen Windungen wird zweckmäßigerweise in Abhängigkeit von der Dicke des Faservlieses und der gewünschten Gesamtstärke der Wandung des Faserüberzuges festgelegt. Anschließend wird eine Imprägnierung mit einem Bindemittel vorgenommen, um die Fasern innerhalb des Faserüberzuges regellos untereinander zu verkleben. In Fällen, in denen eine entsprechende nachträgliche Imprägnierung schwierig durchzuführen ist, empfiehlt es sich demgegenüber, das verwendete Faservlies unmittelbar vor oder während des Wickelns mit dem Bindemittel zu benetzen, beispielsweise durch Einsprühen, und das Faservlies unmittelbar anschließend zu dem schlauchförmig ausgebildeten Faserüberzug aufzuwickeln. Eine entsprechende Vorgehensweise ermöglicht die Erzielung einer besonders gleichmäßigen Bindemittelverteilung über den gesamten Querschnitt des Faserüberzuges.

Es können alle bekannten Bindemittel zur Anwendung kommen, bevorzugt jedoch Polyvinylalkoholharz, Acrylharz, Acrylesterharz, Polyamidharz, SBR oder NBR.

Wenn das Bindemittel in Form einer wäßrigen Lösung oder Emulsion zur Anwendung kommt, empfiehlt es sich, die Trocknung und das Entwässern bei niedrigen Temperaturen vorzunehmen, um eine Aktivierung der schrumpffähigen Fasern in dieser Verfahrensstufe auszuschließen. Eine vollständige Entwässerung ist nicht notwendig, weil zu der anschließend durchgeführten Vorschrumpfung neben der Wärme Feuchtigkeit erforderlich ist.

Es versteht sich von selbst, daß das Entwässern und Trocknen nicht bei niedrigen Temperaturen durchgeführt werden muß, wenn das Bindemittel in organisch gelöster Form oder als Feststoff zur Anwendung kommt.

Das erhaltene schlauchförmige Gebilde aus Bindemittel und Faservlies wird anschließend der Einwirkung von Feuchtigkeit und Wärme ausgesetzt, um die Vorschrumpfung um 3—50% des theoretisch möglichen Schrumpfes der Fasern auszulösen. Die erforderliche Zeitdauer und Temperatur läßt sich durch einfache Vorversuche ermitteln. Neben einer Verringerung des Durchmessers führt eine entsprechende Behandlung zu einer Verdichtung der Faserstruktur und damit zur Erzielung einer guten Abriebfestigkeit der Oberfläche des Faserüberzuges.

Eine ausreichend kompakte Struktur des schlauchförmigen Faserüberzuges wird nicht erhalten, wenn der Schrumpfungskoeffizient weniger als 3% beträgt. Schrumpfungskoeffizienten von mehr als 50% führen demgegenüber zu einer hochgradigen Verdichtung der Faserstruktur und einer unzureichenden restlichen Schrumpfbarkeit des Faserüberzuges während der Montage. Eine unzureichende Haftung auf dem Walzenkern kann hiervon die Folge sein. Bevorzugte Schrumpfungskoeffizienten liegen aus diesen Gründen zwischen 5 und 25%. Neben einer ausreichenden Dichte der Faserstruktur ermöglichen es entsprechende Ausführungen große Differenzen zwischen dem Außendurchmesser des Walzenkernes und dem Innendurchmesser des Faserüberzuges während der Montage auszugleichen.

Der Faserüberzug wird im Anschluß an die Vorschrumpfung getrocknet. Anschließend daran kann eine Hitzebehandlung vorgenommen werden, beispielsweise um die Vulkanisation eines vernetzenden Bindemittels, beispielsweise eines Acrylharzes, von SBR oder NBR, zu bewirken. Die Stabilität der Verbindung zwischen den einzelnen Fasern erfährt hierdurch eine erhebliche Verbesserung. In Fällen, in denen als hygro-thermisch schrumpfbare Fasern Polyvinylalkoholfasern zur Anwendung kommen, ergibt sich zugleich eine Stabilisierung der Fasern, die ohne eine entsprechende Erwärmung wasserlöslich sind.

Abschließend kann die Oberfläche des Faserüberzuges überschliffen und gebürstet werden, um Unregelmäßigkeiten auszugleichen.

Das vorgeschlagene Verfahren erübrigt es, den schlauchförmig ausgebildeten Faserüberzug vor seiner Montage einem Ausdehnungsprozeß zu unterwerfen. Die Herstellung ist dementsprechend wesentlich preisgünstiger möglich als bei einem Faserüberzug der eingangs angegebenen Art. Die Fasern des Faserüberzuges sind nur zu 3—50% vorgeschrumpft, und sie weisen dementsprechend einen Restschrumpf von 50—97% auf. Auch bei großen Maßtoleranzen zwischen dem Innendurchmesser des Faserüberzuges und dem Außendurchmesser des zugehörigen Walzenkernes wird deshalb ein außerordentlich fester Sitz erzielt, wenn der zunächst nur lose aufgeschobene Faserüberzug der Einwirkung heißen Wassers ausgesetzt wird. Wasser mit einer Temperatur von weniger als 40°, insbesondere auch atmosphärische Feuchtigkeit, hat demgegenüber keinerlei Schrumpfung zur Folge. Der vorgeschlagene Faserüberzug kann dementsprechend lange Zeit gelagert werden, ohne daß die in der Luft enthaltene Feuchtigkeit einen Einfluß auf die Maßhaltigkeit oder die Schrumpfbarkeit ausübt.

Das erfindungsgemäß vorgeschlagene Verfahren wird nachfolgend anhand eines Beispieles näher erläutert:

Es wird zunächst ein Faservlies hergestellt, bestehend zu 70 Gew.-% aus Polyvinylalkoholfasern mit einem Titer von 1,5 den und einer Stapellänge von 38 mm und zu 30 Gew.-% aus Reyonfasern mit einem Titer von 1,5 den und einer Stapellänge von 57 mm. Das Faservlies wird unbelastet der Einwirkung von Wasser mit einer Temperatur von 20°C ausgesetzt, was zu einer Schrumpfung von 20% führt. Nach seiner Überführung in ein Wasserbad mit einer Temperatur von 75°C resultiert ein Schrumpf von 95% im unbelasteten Zustand.

Das Faservlies wird mit einer wäßrigen Lösung aus Polyvinylalkoholharz getränkt und durch ein Flachwickelverfahren zu einem Zylinder geformt. Dieser wird im Vakuum bei Normaltemperatur getrocknet, wobei das Bindemittel verfestigt wird, um den weiteren Schrumpf der Polyvinylalkoholfasern kontrollieren zu können.

Das Gewichtsverhältnis zwischen den Fasern und dem Bindemittel beträgt 9 : 1, jeweils bezogen auf Trockengewicht. Das Raumgewicht des schlauchförmigen Faserüberzuges beträgt etwa 0,1 g/cm³.

Der erhaltene, schlauchförmig ausgebildete Faserüberzug wird während einer Zeitspanne von vier Stunden der Einwirkung von Luft mit einer Temperatur von 50° C und einem Feuchtigkeitsgehalt von 50% ausgesetzt, um die Polyvinylalkoholfasern um 10% vorzuschrumpfen. Dabei wird die Faserstruktur verdichtet. Das Raumgewicht steigt auf etwa 0,5 g/cm³, was eine große mechanische Widerstandsfähigkeit anzeigt.

Anschließend wird der erhaltene Faserüberzug während einer Zeitdauer von 30 Minuten einer Temperatur von 150° C in trockener Luft ausgesetzt, wodurch die enthaltene Restflüssigkeit entfernt und die Polyvinylalkoholfasern sowie das Bindemittel aus Polyvinylalkohol unlöslich gemacht werden.

Nachfolgend wird die Oberfläche des Faserüberzuges durch Schleifen geglättet. Er kann von der Aufwickelrolle entfernt und im Sinne der vorstehenden Ausführungen durch Beaufschlagung mit heißem Wasser auf einem Walzenkern verankert werden.

Der erhaltene Faserüberzug zeigt nicht den Schrumpf von Polyvinylalkoholfasern trotz Kontaktes mit feuchter Luft über lange Zeit und zeigt auch keinerlei Verringerung des Durchmessers. Erst die Einwirkung von heißem Wasser mit einer Temperatur von 70° C führt zur sicheren Verankerung des lose auf den Walzenkern aufgeschobenen Faserüberzuges. Selbst große mechanische Belastungen vermögen diesen nicht relativ zum Walzenkern zu verlagern. Entsprechende Walzen eignen sich ausgezeichnet als Einölrollen für die Stahlindustrie, als Quetsch-, Wring- und Andrückrollen.

## Patentansprüche

1. Verfahren zur Herstellung eines durch Behandlung mit heißem Wasser auf einen Walzenkern aufschrumpfbaren, schlauchförmig ausgebildeten Faserüberzuges, bei dem im wesentlichen hygrothermisch um wenigstens 10% schrumpfbare Fasern zu dem Faserüberzug vereint und anschließend durch eine Behandlung mit Feuchtigkeit und Wärme vorgeschrumpft werden, dadurch gekennzeichnet, daß die Fasern innerhalb des Faserüberzuges regellos verklebt werden und daß die Vorschrumpfung unterbrochen wird, wenn 3—50% des theoretisch möglichen Schrumpfes der Fasern erreicht sind.

2. Verfahren nach Anspruch 1, dadurch gekennzeichnet, daß die Schrumpfbehandlung unterbrochen wird, wenn 5—25% des theoretisch möglichen Schrumpfes erreicht sind.

## Claims

1. A process for producing a fibrous covering of tubular structure, which can be shrunk onto a cylinder core by treatment with hot water, in which essentially fibres which are hygrothermally shrinkable by at least 10% are combined to form the fibrous covering and are subsequently preshrunk by a treatment with moisture and heat, characterised in that the fibres are randomly bonded within the fibrous covering and that the preshrinking ist interrupted when 3—50% of the theoretically possible shrinkage of the fibres has been reached.

2. A process according to claim 1, characterised in that the shrinkage treatment is interrupted when 5—25% of the theoretically possible shrinkage has been reached.

## Revendications

1. Procédé de fabrication d'un garnissage fibreux tubulaire, s'emmanchant sur un mandrin de rouleau par traitement à l'eau chaude, et dans lequel des fibres présentant pour l'essentiel un retrait hygrothermique de 10% au minimum sont réunies pour former le garnissage, puis soumises à un préretrait par traitement à l'humidité et à la chaleur, ledit procédé étant caractérisé en ce que les fibres sont collées de façon aléatoire à l'intérieur du garnissage; et le préretrait est interrompu quand il atteint 3—50% du retrait théorique possible des fibres.

2. Procédé selon revendication 1, caractérisé en ce que le traitement de retrait est interrompu quand il atteint 5—25% du retrait théorique possible.